# EUROPEAN PATENT APPLICATION

(11) **EP 4 056 028 A1**
(43) Date of publication of application: **14.09.2022**
(21) Application number: 21315032.9
(22) Date of filing: 08.03.2021
(51) Int. Cl.: A01G 3/033, A01G 3/037, B23D 29/00, A62B 3/00

(54) **HYDRAULIC DEVICE WITH MOVABLE BLADES**

(71) Applicant: Dubuis et Cie, 41000 Villebarrou (FR)
(72) Inventor: Vervier, Patrick, 41000 Villebarou (FR); Cerfeuillet, Vincent, 41000 Villebarou (FR)
(74) Representative: SBD IPAdmin

(57) **Abstract**

A hydraulic device (10) comprising a driving unit (14), a tool unit (12) and a cylindrical shaft (16) extending therebetween. The tool unit (12) is provided with a tool housing (50), a remote hydraulic head (52), a first and a second movable blade (44, 46) and an actuating system (48) provided between the blades (44, 46) and the remote hydraulic head (52). The actuating system (48) comprises a first and a second actuating element (64, 66) and a first and a second rod (68, 70), the first and second actuating elements (64, 66) being pivotable around one common axis and being connected to and actuated by the remote piston (54).

The hydraulic device is such that the first rod (68) is connected to the first blade (44), the first actuating element (64) and the tool housing (50); the second rod (70) is connected to the second blade (46), the second actuating element (66) and the tool housing (50), wherein the first rod (68), the first actuating element (64) and the first blade (44) are pivotably movable around a first common blade axis, and wherein second rod (70), the second actuating element (66) and the second blade (46) are pivotably movable around a second common blade axis, the second common blade axis being distinct from the first common blade axis.

## Description

The present invention relates to a hydraulic device that includes a tool unit having a first and a second blade. The tool unit is operated by pressure fluid (for example pressure oil) generated by a hydraulic pump.

The present application refers for example to demolition device or equipment, however, the device is also referred to as construction equipment, scrap handling equipment, rescue equipment and the like. The description of demolition device or construction device is not intended to be restrictive of the device being referenced. This device provides for the efficient cutting and handling of scrap. For example, in the dismantling of an industrial building, metal scrap in the form of various diameter pipes, structural I-beams, channels, angles, sheet metal plates and the like, must be efficiently severed and handled by heavy-duty metal shears or cutters. Such shears or cutters can also be utilized for reducing automobiles, truck frames, railroad cars and the like. The shears must be able to move and cut the metal scrap pieces regardless of the size or shape of the individual scrap pieces and regardless of the environment. Indeed, in some cases, the pieces to be removed are difficult to access (for example work at height). The present application refers also to devices used to remove roofing, notably dangerous roofing containing for instance asbestos.

Several documents disclose a hydraulic device having a tool unit for demolition or rescue purposes. EP3741513A1 discloses a portable hydraulic device that includes a tool unit having a tool that operates by pressure oil generated by a hydraulic pump, and a driving unit that is detachably mounted to the tool unit and has a motor for driving rotation of a rotary member disposed in the hydraulic pump of the tool unit. DE102018128312 relates a hydraulic cutting device with a tool unit having a first and a second blade or a jaw, a system with a plurality of actuation elements for actuating the first and second blades. EP1882552 discloses another example of a hydraulic device for the separation of a first structure at a connecting point to a second structure, wherein damage to the first structure and costs of production are minimized.

Such devices are not always shaped to be used in area difficult to access and there is still a need to provide a robust transmission of the forces to optimize a shearing or cutting function.

It is therefore an object of the present disclosure to provide a hydraulic device, for cutting or shearing for instance, which can be used in environment difficult to access to with an optimized jaw structure to maximize power and efficiency.

Accordingly, the present disclosure is directed to a hydraulic device according to claim 1. More particularly, the hydraulic device comprises a driving unit with a grip, an electric motor, a hydraulic pump, and a hydraulic body, wherein the electric motor powers the hydraulic pump. The hydraulic body is connected to the hydraulic pump. The hydraulic device also comprises a tool unit with a tool housing, a remote hydraulic head, a first and a second movable blade and an actuating system provided between the blades and the remote hydraulic head, wherein the remote hydraulic head comprises a remote piston and a remote cylinder, and wherein the actuating system comprises a first and a second actuating element and a first and a second rod, the first and second actuating elements being pivotable around one common axis and being connected to and actuated by the remote piston. A shaft is provided between the tool unit and the driving unit. The structure of the actuating system is such that the first rod is connected to the first blade, the first actuating element and the tool housing; the second rod is connected to the second blade, the second actuating element and the tool housing, wherein the first rod, the first actuating element and the first blade are pivotably movable around a first common blade axis, and wherein second first rod, the second actuating element and the second blade are pivotably movable around a second common blade axis, the second common blade axis being distinct from the first common blade axis.

Such arrangement allows an optimized jaw structure and more particularly an optimized transmission of the forces which maximizes power and efficiency but remains compact and can be used in different environment, notably areas that are not readily accessible.

In an embodiment, the cylindrical shaft extends along a longitudinal axis X, and a hose is arranged inside the cylindrical shaft and extends along the cylindrical shaft, the hose having a first end connected to the hydraulic body and a second end connected to the remote cylinder. The cylinder shaft protects the hose and the hose allows the hydraulic pump to power the remote hydraulic head through the hydraulic body.

In an embodiment, the remote piston extends within the remote cylinder and is slidably movable against a spring action, and wherein the second end of the hose is connected to a remote cylinder cap end port, such that a hydraulic communication is established between the hydraulic body and the remote piston. The spring forces the remote piston in a rest position.

In an embodiment, the remote cylinder is arranged partly within the cylindrical shaft and partly within the tool housing. This allows a compact by robust assembly.

In an embodiment, the hydraulic body comprises a first cylinder and a first piston, wherein the first piston extends partly within the first cylinder and is rotatably movable within the first cylinder. In an embodiment, the first piston is not slidably movable within the first cylinder.

In an embodiment, the first end of the hose is connected to a portion of the first piston extending outside of the first cylinder. This allows a compact but robust assembly.

In an embodiment, the first piston is hollow. The first piston comprises a first chamber and a second chamber connected together through a channel.

In an embodiment, the tool unit is pivotably movable with regard to the cylindrical shaft. This allows to reach hidden areas.

In an embodiment, the rotation of the tool unit is actuated by a steering element arranged on the driving unit. A user can easily control the rotation of the tool unit and direct the tool unit.

In an embodiment the cylindrical shaft has a length along the longitudinal axis between 0,5 and 1,5 meters. This range allows to reach areas difficult to access with a device which remains easily operable by a user.

In an embodiment, a direct trigger is provided between the first and second blades. The direct trigger allows a cutting action controlled by the piece to be cut.

In an embodiment, the direct trigger is slidably movable with regard to the blades between a rest position and an actuation position, wherein in the actuation position, the trigger actuates a switch which controls the actuation of the blades through the driving unit. More particularly, the switch is directly connected to the driving unit. The direct trigger is thus easily assembled and easily actionable.

In an embodiment, the first and second blades are connected together through a retainer. In an embodiment, the retainer is arranged between a first pivot pin connected to the first blade and a second pivot pin connected to the second blade. This ensures the stability.

In an embodiment, the first and second actuating elements are rotatable around the one common axis with a common pivot pin, and wherein the remote piston slidably moves the common pivot pin. This ensures the compactness of the tool unit.

In an embodiment, an end of the remote piston is connected to the common pivot pin, wherein the first and the second actuating elements are connected to the common pivot pin, and wherein the end of the remote piston extends between the first and the second actuating elements. This ensures the compactness of the tool unit.

A specific embodiment of the present invention will now be described, by way of example only and with reference to the accompanying drawings, of which:
Fig. 1 shows a perspective view of the hydraulic device according to the invention with a driving unit, a tool unit and a cylindrical shaft provided between the driving unit and the tool unit;
Fig. 2 shows the hydraulic device of Fig. 1 with a portion of the tool unit, the driving unit and the cylindrical shaft in cross-sectional view;
Fig. 3 shows the tool unit of Fig. 2 with an actuating system and a remote hydraulic head with a remote piston;
Fig. 4 shows the driving unit of Fig. 2 with a hydraulic body having a first piston and a first cylinder;
Fig. 5A, Fig. 5B and Fig. 5C show the actuation system of Fig. 3 in three different positions. In Fig. 5A the tool unit is in the rest position (the blades are spaced apart from each other), in Fig. 5C the tool unit is in an active position (the blades are closed) and Fig. 5B depicts an intermediate position between the rest position and the active position;
Fig. 6 is a side view of the hydraulic device with the tool unit being inclined with regard to the cylindrical shaft;
Fig. 7 shows the tool unit according to one embodiment with a direct trigger provided between the first and second blades.

Corresponding reference numerals indicate corresponding parts throughout the several views of the drawings.

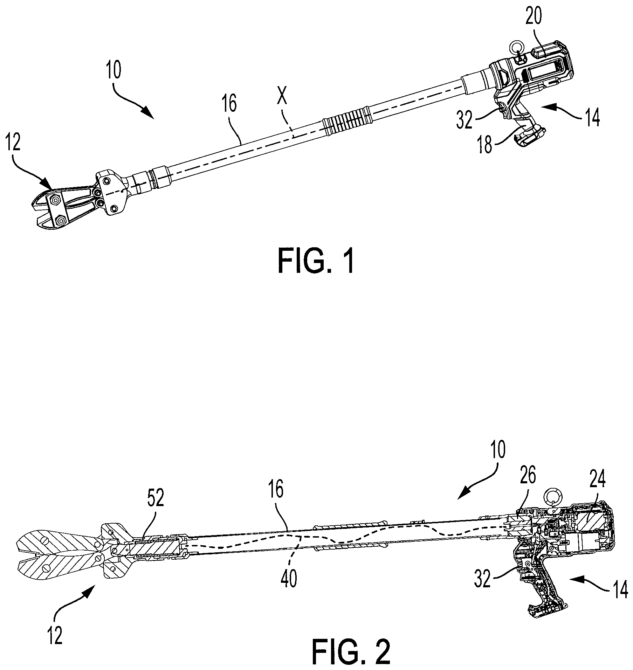

Fig. 1 shows a hydraulic device 10 comprising a tool unit 12, a driving unit 14 and a cylindrical shaft 16.

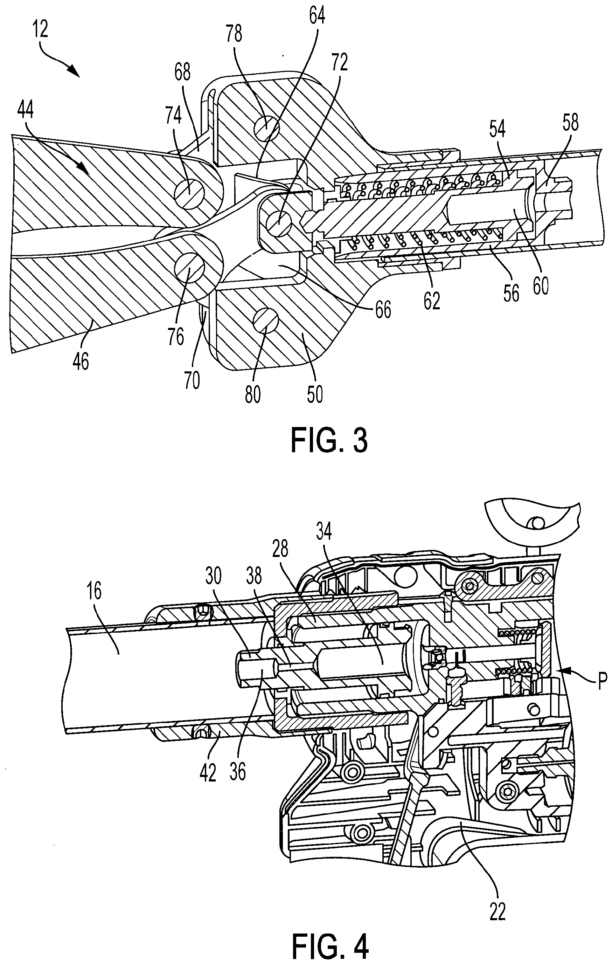

The driving unit 14 is more particularly depicted in Fig. 4. The driving unit 14 has a grip 18 and a main part 20. The main part 20 comprises a driving housing 22. An electric motor 24 and a hydraulic pump P are provided and arranged within the driving unit. The hydraulic pump P is powered by the electric motor 24. A hydraulic body 26 is connected to the hydraulic pump P. The hydraulic body 26 comprises for instance a first cylinder 28 and a first piston 30 arranged within the cylinder. The first piston 30 is a 'false' piston. The first piston is rotatably movable within the first cylinder. The first piston 30 is not slidably movable within the first cylinder 28. The rotation of the first piston allows the coupling to a hose (described below). The main part 20 longitudinally extends along a longitudinal axis X, and the grip 18 may extend sensibly perpendicular to the longitudinal axis X. The main part 20 comprises a first end and a second end along the longitudinal axis X. The motor is arranged within the driving housing 22 in the vicinity of the first end, wherein the grip 18 extends from the main part in the vicinity of the second end. A trigger 32 may be provided on the grip 18. The trigger 32 actuates for example the motor 24. The hydraulic pump can then be actuated through the motor 24 and is configured, in response to the movement of motor 24, to increase the pressure of a hydraulic liquid (for instance pressure oil) in the hydraulic body 26. The hydraulic liquid is notably partly extending in the first cylinder 28. As previously mentioned, the first piston does not slide within the first cylinder and an abutment is provided at an end of the first cylinder to prevent the translation.

The first piston 24 is hollow. It longitudinally extends between a first end and a second end, and comprises a first chamber 34 at its first end and a second chamber 36 at its second end. A channel 38 extends between the first and the second chamber for fluidly connecting the first and second chamber 34, 36. The first chamber 34 is sensibly cylindrical and has a first diameter in cross section. The second chamber 36 is sensibly cylindrical and has a second diameter in cross-section. The first diameter is greater than the second diameter. The diameter of the cross-section of the channel is smaller than the first or second diameter. The length of the first chamber Is greater than the length of the second chamber or the length of the channel. The hydraulic liquid partly extending in the first cylinder 28 is also sent toward the first chamber 34. The second end of the first piston 30 partly extends outside of the first cylinder 34. The second end of the first piston partly extends outside of the driving housing.

The second end of the first piston 30 is connected to a hose 40 extending within the cylindrical shaft 16. The hose 40 is for instance a flexible hose adapted to receive the hydraulic liquid. A first end of the hose 40 is connected to the second end of the first piston 30 and therefore to the second chamber 36 arranged within the first piston 30. The hose 40 is a reinforced hose with composite or metallic material to support high pressures. For example, pressures of about 700 - 800 bars, in particular 720 bars or 740 bars may be applied. For example, the first end of the hose in press-fitted to the second end of the first piston 30. A sealed connection is established between the first end of the hose 40 and the second end of the first piston 30. A specific thread, like 1/4 BSP or 3/8NPT may be used. A seal metal washer may also be arranged between the female and male threads, or the sealing may also be realized at the bottom of the female thread. The cylindrical shaft 16 is made of rigid material in order to protect the hose, for example it is a glass fibre tube. The cylindrical shaft 16 is fixed to the first cylinder 28. A portion of the first cylinder 28 extends outside of the driving housing. A ring 42 covers an end of the cylindrical shaft 16 and the portion of the first cylinder 28 extending outside the driving housing 22. The cylindrical shaft 16 is fixed to the ring 42. The ring 42 is slidably mounted on an outside surface of the first cylinder and fixed to said first cylinder through two screws. In another embodiment, a press-fit connection may also be realized.

The cylindrical shaft 16 extends along the longitudinal axis X. The cylindrical shaft 16 is for instance between 0,5 and 1,5 m long, and more particularly is at least 0,7m long. The cylindrical shaft 16 is in particular less than 1,2 m long. The cylindrical shaft 16 extends between a first end, connected to the driving unit 14 (through the ring 42) and a second end connected to the tool unit 12.

The tool unit 12 is provided with a first blade 44, a second blade 46, an actuating system 48, a tool housing 50 and a remote hydraulic head 52 with a remote piston 54, as illustrated in Fig. 2 and Fig. 3 notably. The first blade and the second blade form the jaw (in other words, the first blade is first a half-jaw, and the second blade is a second half jaw). The second end of the cylindrical shaft 16 and the second end of the hose 40 are connected to the remote hydraulic head 52. More particularly, the remote piston 54 extends in a remote cylinder 56. The remote cylinder 56 has a remote cylinder cap end port 58 and the second end of the hose 40 is fitted to the remote cylinder cap end port 58. Thus, a fluidly connection is established between the hose 40 and the remote cylinder 56. The second end of the cylindrical shaft 16 extends around a portion of the remote cylinder 56 and is fitted to it. The remote piston 54, extending within the remote cylinder 56 comprises a third chamber 60 adapted to receive hydraulic liquid. The remote piston 54 is adapted to slidably move within the remote cylinder 56 through the pressure applied by the hydraulic liquid. The remote piston 54 moves against a force applied by a spring 62 provided around the piston. The remote piston 54 extends longitudinally between a first end, directed to the cylindrical shaft 16 and a second end connected to the actuating system 48. The tool housing 50 is provided around a portion of the remote cylinder 56 and is connected to said portion of the remote cylinder 56 (for example is press-fitted or glued to said portion).

The actuating system 48 comprises a first and a second actuating element 64, 66 and a first and a second rod 68, 70. The first and second actuating elements 64, 66 are rotatable around one common axis and are connected to and actuated by the remote piston 54. More particularly, the first and second actuating elements 64, 66 are connected through a common pivot pin 72. The common pivot pin 72 is assembled to the second end of the remote piston 54 and is moved by the remote piston 54 along the longitudinal axis X between a rest position and an active position.

The first actuating element 64 is a rod-like element and is connected to one end to the common pivot pin 72 and at the other end to the first blade 44 through a first blade pivot pin 74. The first rod 68 is also connected to the first blade 44 through the first blade pivot pin 74 at one end. At its other end, the first rod 44 is connected to the tool housing 50. This ensures a robust assembly.

The second actuating element 66 is a rod-like element and is connected to one end to the common pivot pin 72 and at the other end to the second blade 46 through a second blade pivot pin 76. The second rod 70 is also connected to the second blade 46 through the second blade pivot pin 76 at one end. At its other end, the second rod 46 is connected to the tool housing 50. This ensures a robust assembly. The second blade pivot pin 76 and the first blade pivot pin 74 extend along axis which are parallel but disassociated or not coincident. For example the distance between the two axis may be in the range of 30 to 40 mm.

The blades are easily replaceable through the blade pivot pins.

The first rod 68 is connected to the tool housing 50 through a first housing pivot pin 78. The second rod 70 is connected to the housing 50 through a second housing pivot 80. The common pivot pin 72 extends between the first housing pivot pin 78 and the second housing pivot 80. The first housing pivot pin 78, the second housing pivot 80 and the common pivot pin 72 extend along axis which are parallel but disassociated or not coincident.

The first and second blades 44, 46 are connected together through a retainer 82. The retainer 82 is arranged between a first pivot pin 84 connected to the first blade 44 and a second pivot pin 86 connected to the second blade 46.

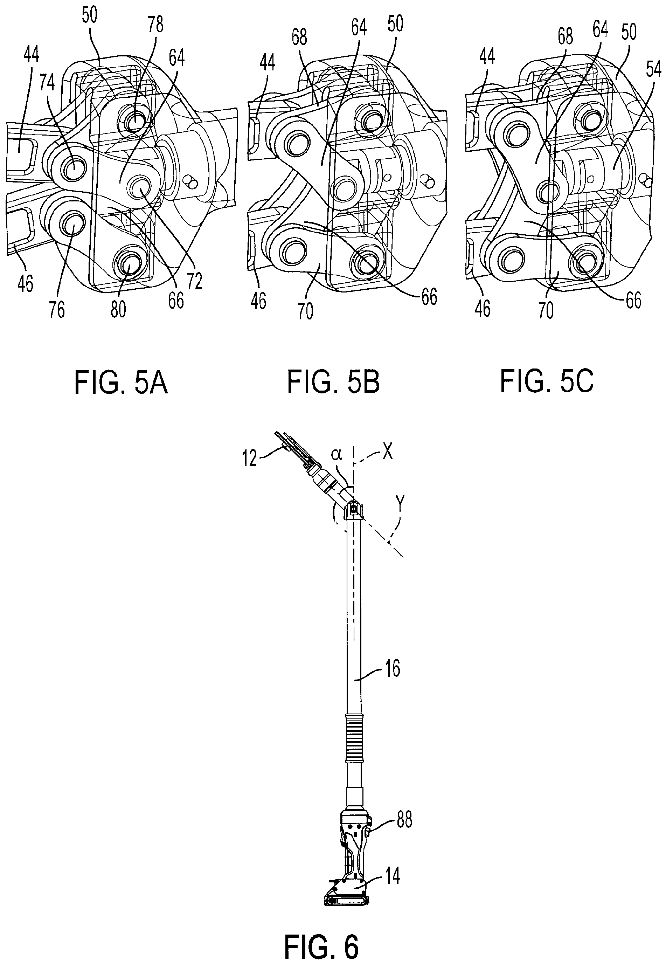

When the remote piston 54 is in the rest position (Fig. 5A), the blades 44, 46 are open (or in an open position, e.g. the blades are spaced from each other). When the remote piston 54 is in the active position (Fig. 5C), the blades are closed and adapted to cut or shear a piece.

More particularly, in the rest position of the remote piston 54, no force is applied on the first or second actuating element 64, 66 and the blades remain open. When a cutting action is needed, a user may push the trigger to actuate the motor 24. The first piston 30 moves under pressured hydraulic fluid and the force is forwarded to the remote piston 54 with the hydraulic fluid moving the remote piston 54 against the spring's action and toward the active position. When moving, the remote piston 54 moves the common pivot pin 72 such that the distance between the first blade pivot pin 74 and the second blade pivot pin 76 increases. The blades 44, 46 pivot around the first and second blade pins 84, 86, such that when the distance between the first blade pivot pin 74 and the second blade pivot pin 76 increases, the distance between the ends of the blades opposite the first and second blade pivot pins 74, 76 decreases such that the blades move toward a close position. The ends of the blades opposite the first and second blade pivot pins correspond to the functional part, e.g. the part having the cutting or shearing function and adapted to cut or shear pieces.

In an embodiment depicted in Fig. 6, the tool unit 12 may pivot with regard to the cylindrical shaft 16. For instance, the tool housing is rotatably connected to the cylindrical shaft 16. The tool unit 12 can thus either extends along the longitudinal axis X or extends along a tool axis Y which forms an angle α with the longitudinal axis X, the angle α being for example between 0 and 90 degrees, and more particularly between 0 and 45 degrees, or 30 degrees. The pivoting of the tool unit 12 may be controlled through a steering element 88 provided on the driving unit 14.

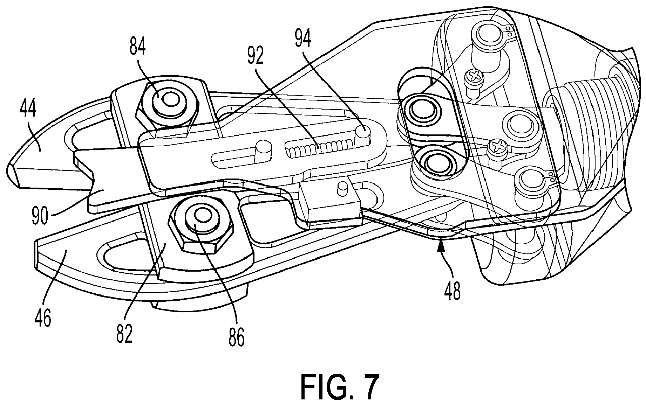

In an embodiment, a direct trigger 90 may be provided on the tool unit 12, as depicted in Fig. 7. The direct trigger 90 is provided between the first and second blades 44, 46. The direct trigger 90 is slidably movable with regard to the blades 44, 46 between a rest position and an actuation position, wherein in the actuation position, the trigger actuates a switch which controls the actuation of the blades 44, 46. The direct trigger 90 comprises a slot 92 in which a guiding pin 94 extends. An elastic element may force the guiding pin 94 in a rest position. For example, the slot is a first slot, the guiding pin is a first guiding pin 94, and the trigger comprises a second slot in which a second guiding pin extends. The direct trigger 90 comprises a section extending between the functional part of the blades 44, 46. This section may have a V-shaped front surface and is such that when the blades 44, 46 approach the piece to be cut, said piece pushes the direct trigger 90 against the force of the elastic element, thus the direct trigger 90 slidably moves to actuate mechanically the switch, which is directly connected to the driving unit and can thus control the closing of the blades, as previously described with the first and remote pistons. In an embodiment, the cut function may be activated if the direct trigger 90 and the trigger provided on the driving unit are both actuated. This increase the security of the device.
hydraulic device 10
tool unit 12
driving unit 14
cylindrical shaft 16
grip 18
main part 20
driving housing 22
electric motor 24
hydraulic pump P
hydraulic body 26
first cylinder 28
first piston 30
trigger 32
first chamber 34
second chamber 36
channel 38
hose 40
ring 42
first blade 44
second blade 46
actuating system 48
tool housing 50
remote hydraulic head 52
remote piston 54
remote cylinder 56
remote cylinder cap end port 58
third chamber 60
spring 62
first and a second actuating element 64, 66
first and a second rod 68, 70
common pivot pin 72
first blade pivot pin 74
second blade pivot pin 76
first housing pivot pin78
second housing pivot 80
retainer 82
first pivot pin 84
second pivot pin 86
angle α
tool axis Y
longitudinal axis X
steering element 88
direct trigger 90
slot 92
guiding pin 94

## Claims

1. A hydraulic device (10) comprising:
- a driving unit (14) with a grip (18), an electric motor (24),a hydraulic pump (P) and an hydraulic body (26), wherein the electric motor (24) powers the hydraulic pump (26), and wherein the hydraulic body (26) is connected to the hydraulic pump (P);
- a tool unit (12) with a tool housing (50), a remote hydraulic head (52), a first and a second movable blade (44, 46) and an actuating system (48) provided between the blades (44, 46) and the remote hydraulic head (52), wherein the remote hydraulic head (52) comprises a remote piston (54) and a remote cylinder (56), and wherein the actuating system (48) comprises a first and a second actuating element (64, 66) and a first and a second rod (68, 70), the first and second actuating elements (64, 66) being pivotable around one common axis and being connected to and actuated by the remote piston (54);
- a cylindrical shaft (16) provided between the tool unit (12) and the driving unit (14),
**Characterized in that** the first rod (68) is connected to the first blade (44), the first actuating element (64) and the tool housing (50); the second rod (70) is connected to the second blade (46), the second actuating element (66) and the tool housing (50), wherein the first rod (68), the first actuating element (64) and the first blade (44) are pivotably movable around a first common blade axis, and wherein second rod (70), the second actuating element (66) and the second blade (46) are pivotably movable around a second common blade axis, the second common blade axis being distinct from the first common blade axis.

2. Hydraulic device (10) according to claim 1, wherein the cylindrical shaft (16) extends along a longitudinal axis (X), and a hose (40) is arranged inside the cylindrical shaft (16) and extends along the longitudinal axis (X), the hose (40) having a first end connected to the hydraulic body (26) and a second end connected to the remote cylinder (56).

3. Hydraulic device (10) according to claim 2, wherein the remote piston (54) extends within the remote cylinder (56) and is slidably movable against a spring action, and wherein the second end of the hose (40) is connected to a remote cylinder cap end port, such that a hydraulic communication is established between the hydraulic body and the remote piston.

4. Hydraulic device (10) according to claim 2 or 3, wherein the hydraulic body (26) comprises a first piston (30) and a first cylinder (28), the first piston (30) being partly arranged within the first cylinder, and wherein the first end of the hose (40) is connected to a portion of the first piston (30) extending outside of the first cylinder (28).

5. Hydraulic device (10) according to claim 4, wherein the first piston (30) is hollow.

6. Hydraulic device (10) according to any of claims 1 to 5, wherein the remote cylinder (56) is arranged partly within the cylindrical shaft (16) and partly within the tool housing.

7. Hydraulic device (10) according to any of claims 1 to 6, wherein the tool unit (12) is pivotably movable with regard to the cylindrical shaft (16).

8. Hydraulic device (10) according to claim 7, wherein the rotation of the tool unit (12) is actuated by a steering element (88) arranged on the driving unit.

9. Hydraulic device (10) according to any of claims 1 to 8, wherein the cylindrical shaft (16) has a length along the longitudinal axis (X) between 0,5 and 1,5 meters.

10. Hydraulic device (10) according to any of claims 1 to 9, wherein a direct trigger (90) is provided between the first and second blades (44, 46).

11. Hydraulic device (10) according to claim 10, wherein the direct trigger (90) is slidably movable with regard to the blades (44, 46) between a rest position and an actuation position, wherein in the actuation position, the direct trigger (90) actuates a switch which controls the actuation of the blades (44, 46).

12. Hydraulic device (10) according to any of claims 1 to 11, wherein the first and second blades (44, 46) are connected together through a retainer (82).

13. Hydraulic device (10) according to claim 12, wherein the retainer (82) is arranged between a first pivot pin (84) connected to the first blade and a second pivot pin (86) connected to the second blade.

14. Hydraulic device (10) according to any of claims 1 to 13, wherein the first and second actuating elements (64, 66) are rotatable around the one common axis with a common pivot pin (72), and wherein the remote piston slidably moves the common pivot pin (72).

15. Hydraulic device (10) according to claim 14, wherein an end of the remote piston (54) is connected to the common pivot pin (72), wherein the first and the second actuating elements (64, 66) are connected to the common pivot pin (72), and wherein the end of the remote piston (54) extends between the first and the second actuating elements (64, 66).
